# EUROPÄISCHE PATENTSCHRIFT

(11) **EP 1 646 460 B1**
(45) Veröffentlichungstag und Bekanntmachung des Hinweises auf die Patenterteilung: **22.04.2015**
(21) Anmeldenummer: 04762394.7
(22) Anmeldetag: 08.07.2004
(51) Int. Cl.: B21H 1/06, B21H 1/12, F16C 33/64, B23P 15/00

(54) **RINGFÖRMIGE VERBUNDWERKSTÜCKE UND EIN KALTWALZVERFAHREN ZU IHRER FERTIGUNG**
ANNULAR COMPOSITE WORKPIECES AND A COLD-ROLLING METHOD FOR PRODUCING SAID WORKPIECES
PIÈCES COMPOSITES ANNULAIRES ET PROCÉDÉ DE LAMINAGE À FROID POUR FABRIQUER DE TELLES PIÈCES

(30) Priorität: 09.07.2003 DE 10331061
(43) Veröffentlichungstag der Anmeldung: 19.04.2006
(73) Patentinhaber: Technische Universität Dresden, 01069 Dresden (DE)
(72) Erfinder: FICKER, Thomas, 08352 Raschau (DE); HARDTMANN, André, 01159 Dresden (DE); HOUSKA, Mario, 01855 Sebnitz (DE); THOMS, Volker, 01734 Rabenau (DE)
(74) Vertreter: Kailuweit & Uhlemann Patentanwälte Partnerschaft mbB
(86) Internationale Anmeldenummer: PCT/DE2004/001539
(87) Internationale Veröffentlichungsnummer: WO 2005/005079

(56) Entgegenhaltungen:
- EP-A- 1 302 274
- CS-B1- 261 099
- DE-A- 2 208 515
- DE-A- 2 745 527
- DE-A- 19 526 900
- GB-A- 2 232 726
- JP-A- S 609 517
- US-A- 3 528 271
- US-A- 3 859 831
- US-A- 4 774 749
- PATENT ABSTRACTS OF JAPAN Bd. 2000, Nr. 24, 11. Mai 2001 (2001-05-11) -& JP 2001 200854 A (KOYO SEIKO CO LTD), 27. Juli 2001 (2001-07-27)
- PATENT ABSTRACTS OF JAPAN Bd. 0072, Nr. 91 (M-265), 27. Dezember 1983 (1983-12-27) -& JP 58 163821 A (FUJI SEIKOU KK), 28. September 1983 (1983-09-28)
- DATABASE WPI Week 197904, Derwent Publications Ltd., London, GB; Class M21, AN 1979-06710B -& JP S53 142 360 A (FURUKAWA ELECTRIC CO LTD) 12 Dezember 1978

## Beschreibung

Die Erfindung betrifft ringförmige Verbundwerkstücke, insbesondere Wälzlagerringe, und ein Kaltwalzverfahren zu ihrer Fertigung von aus wenigstens zwei hohlzylindrischen Werkstücken aus verschiedenen Werkstoffen bzw. gleichen Werkstoffen unterschiedlicher Festigkeit (im folgenden verschiedenen Werkstoffen).

Vereinzelt ist in der Literatur die Fertigung derartiger Wälzlagerringe beschrieben worden.

Nach DE 200 923 wird über einen gehärteten Ring nach dessen Fertigbearbeitung und dem Füllen mit Kugeln ein ungehärteter Verstärkungsring gezogen. Es wird darauf verwiesen, dass das Lager mehr Kugeln aufnehmen kann, weil sich der gehärtete Ring beim Füllen elastisch verformen lässt. Ein Werkstoffverbund und damit einhergehend eine ausreichende dynamische Belastbarkeit kann mit dieser Lösung nicht erreicht werden.

In DE 27 45 527 die die Merkmale des Oberbegriffs des Anspruchs 1 offenbart, wird die Fertigung von Wälzlageraußenringen durch Kaltwalzen beschrieben. Zwei volumengenaue Ringe aus verschiedenen Werkstoffen werden durch Schrumpfen miteinander fest verbunden, anschließend profilgewalzt und danach durch Überdrehen und Schleifen fertig bearbeitet. Die Vorteile werden vor allem in der Kombination der Werkstoffeigenschaften gesehen, hier vor allem in der Verbindung eines Laufrings großer Härte mit ausgezeichneten Verschleißeigenschaften mit einem Stützring geringerer Härte und Festigkeit, der dann leichter bearbeitet werden kann. Beim Umformen werden die Ringe gemeinsam gleichzeitig tangential, radial und axial verformt. Ein fester Verbund der beiden Ringe wird nur in Ausnahmefällen erreicht. Unterschiedliche Werkstoffe verfügen in der Regel über ein unterschiedliches Aufweitvermögen, so dass die Ringe eher auseinander gehen (die Schrumpfverbindung wird gelöst) als fest zusammen bleiben. Zur technischen Umsetzung des Verfahrens ist eine komplexe Werkzeugkonfiguration aus mehreren geteilten Werkzeugformen notwendig. Die Kosten sind hoch, das Fertigungsspektrum begrenzt und bezüglich komplizierter Profilquerschnitte stark eingeschränkt. Trotz der einleuchtenden Vorteile aus dem potentiell höheren Gebrauchswert der Verbundwälzlager ist keine größere Anwendung von DE 27 45 527 bekannt geworden.

Die US 3,859,831 offenbart die Merkmale der Oberbegriffs des Anspruchs 7.

Aufgabe der Erfindung ist es, ringförmige Verbundwerkstücke für insbesondere hohe dynamische Belastungen aus wenigstens zwei hohlzylindrischen Werkstücken rationell zu fertigen.

Erfindungsgemäß wird die Aufgabe durch ein Verfahren mit den im Anspruch 1 genannten Merkmalen gelöst.

Weiterhin wird die Aufgabe durch ein ringförmiges Verbundwerkstück mit den im Anspruch 7 genannten Merkmalen gelöst.

Vorteilhafte Varianten und Ausgestaltungen sind Gegenstand von Unteransprüchen.

Axiale Profilwalzverfahren sind spätestens seit 1972 bekannt. "Beim Walzen wird das durch das Eindringen des Profils quer zur Achsrichtung des Werkstücks zusammengedrückte Material seitlich so weit nach außen verdrängt, dass über die ursprüngliche Breite des Werkstücks .... vorstehende seitliche Begrenzungsränder gebildet werden." (DE 22 08 515, S. 2).

Es wurde gefunden, dass die wenigstens zwei Werkstücke fest miteinander verbunden werden, auch wenn sie zuvor nur lose ineinander gesteckt und nicht aufeinander geschrumpft waren. Der Verbund weist Merkmale einer Kaltpressschweißverbindung auf, die auf das Zusammenpressen der Werkstückflächen mit sehr hohem Druck zurückzuführen sind.

Die Werkstücke haben vorzugsweise ein solches Spiel zueinander, das sie gerade noch von Hand fügbar sind.

Indem ein solches Spiel zulässig ist, können auch Rohre, d. h. längere hohlzylindrische Werkstücke, unkompliziert ineinander gefügt werden.

Einsetzbar sind dadurch sowohl das axiale Profilringwalzen (z. B. DE 22 08 515) als auch das axialen Profilrohrwalzen (z. B. DD 225 358 oder DE 195 26 900). Mit dem letzteren Verfahren können die Verbundringe besonders rationell und materialsparend gefertigt werden.

Es können sowohl profilierte Außen- als auch Innenwälzlagerringe produziert werden. Die Laufringe sind jeweils aus hochwertigem Wälzlagerstahl gefertigt. Die Stützringe dagegen bestehen aus einem weniger festen Stahl, der billiger ist und leichter bearbeitet werden kann, wodurch die Gesamtkosten für den Wälzlagerring deutlich gesenkt werden.

Es sind auch Verbundringe aus Stahl in Kombination mit Nichteisenmetallen, insbesondere Aluminium, herstellbar, beispielsweise für den Leichtbau oder zum Korrosionsschutz. Durch die funktionsangepasste Werkstoffauswahl werden in beträchtlichem Umfang Fertigungskosten eingespart und neue Gebrauchseigenschaften erzielt.

Die Erfindung wird nachfolgend an mehreren Ausführungsbeispielen auf der Basis des axialen Profilrohrwalzens näher erklärt.

In den Zeichnungen zeigen
Fig. 1 die Vorbereitung der zu walzenden Rohre,
Fig. 2 die Fertigung von Wälzlagerinnenringen aus zwei Rohren,
Fig. 3 einen einzelnen aus zwei Rohren gefertigten Wälzlagerinnenring,
Fig. 4 die Fertigung von Wälzlagerinnenringen aus drei Rohren,
Fig. 5 die Fertigung eines Getrieberings aus zwei hohlzylindrischen Werkstücken,
Fig. 6 die Fertigung von Wälzlageraußenringen aus zwei Rohren,
Fig. 7 und 8 Schnitt und Seitenansicht eines Tangentialringwalzverfahrens,
Fig. 9 und 10 Schnitt und Seitenansicht eines Axialringwalzverfahrens.

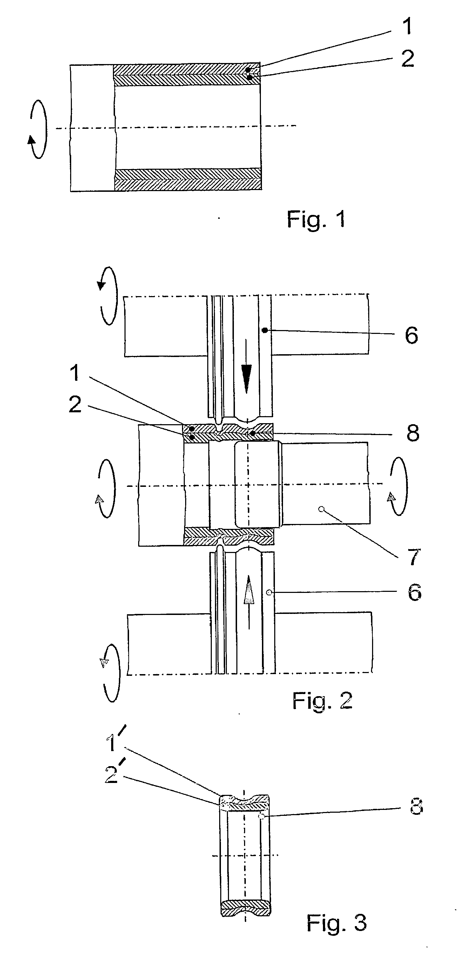

Gemäß Fig. 1 werden zwei Rohre 1 und 2 zur Umformung vorbereitet. Sie sind, sofern erforderlich, außen überdreht und innen ausgedreht und danach ineinander gesteckt.

In Fig. 2 befinden sich die beiden Rohre 1 und 2 auf einem Walzdorn 7 zwischen zwei Außenprofilwalzwerkzeugen 6. Die Profilwalzen 6 sind diametral angeordnet, drehbar und radial zustellbar. Außerdem sind sie axial verschiebbar, um den Rohrlängungen durch den axialen Materialfluss zu folgen.

Fig. 3 zeigt den Verbundwälzlagerinnenring 8 nach Abstechen und spanender Überarbeitung komplett schleiffertig. Die ursprünglichen Rohre 1 und 2 bilden jetzt den Laufring 1', z. B. aus hochfestem Wälzlagerstahl, und den Stützring 2' aus einem weniger festen und leichter zu bearbeitenden Stahl.

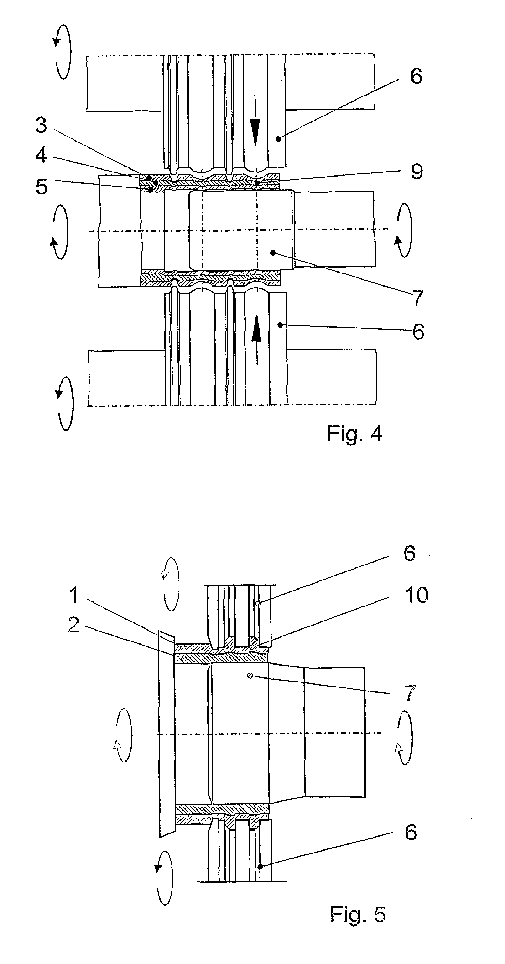

Fig. 4 zeigt die Fertigung eines Verbundwälzlagerinnenrings 9 aus drei Werkstücken 3, 4 und 5. Die wiederum als Rohre ausgebildeten Werkstücke 3 und 5 bestehen aus unterschiedlichen Stählen analog zur ersten Variante, Werkstück 4 ist aus Aluminium. Es kann bewusst dick gehalten werden (Leichtbau) oder auch nur eine dünne, z. B. aufgedampfte Schicht sein, um die Verbindung der Rohre 3 und 5 beim Walzen des Verbundes analog zum Kaltpressschweißen zu fördern.

Fig. 5 zeigt die Herstellung eines Getrieberinges 10 aus zwei Rohren 1 und 2 mit zwei Außenprofilwalzwerkzeugen 6 und einem Walzdorn 7. Die Werkstücke 1 und 2 bestehen aus Stahlwerkstoffen unterschiedlicher Festigkeit.

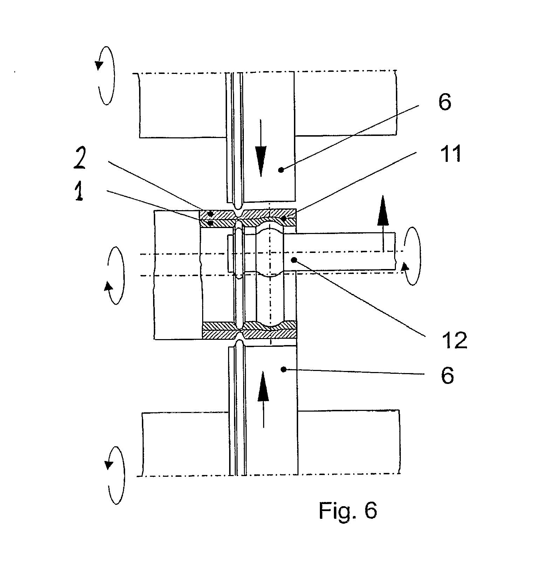

In Fig. 6 ist die Herstellung eines Verbundwälzlageraußenrings 11 dargestellt. Das hochfestere Rohr 1 bildet wieder den Laufring und liegt jetzt im Vergleich zu Fig. 2 bzw. 3 innen.

Bei allen Varianten ist gesichert, dass das Material vor allem im Bereich der angrenzenden Schichten fast über den gesamten Umformprozess axial frei fließen kann.

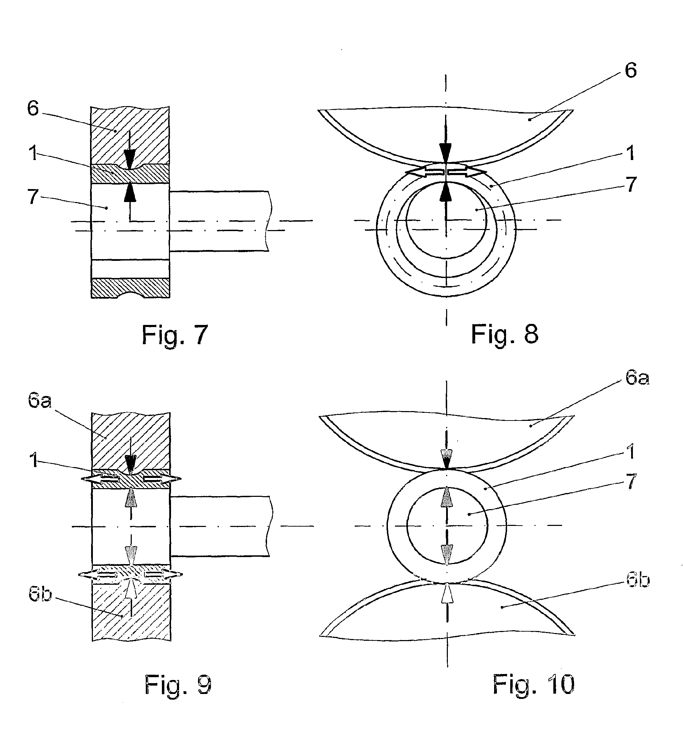

Um mögliche Missverständnisse über den Begriff des Axialprofilring- bzw. - rohrwalzverfahrens auszuschließen werden nachfolgend die in dieser Erfindungsbeschreibung verwendeten Definitionen des Tangential- und des Axialprofilringwalzens gegenübergestellt und an Hand der Figuren 7 und 8 bzw. 9 und 10 erläutert.

Die Figuren 7 und 8 zeigen im Schnitt bzw. in der Seitenansicht das Tangentialprofilringwalzen eines Werkstücks 1 zwischen einem Profilwalzwerkzeug 6 und einem Walzdorn 7. Die eingezeichneten Pfeile mit den gefüllten Spitzen (in senkrechter Blattrichtung) kennzeichnen den Druck der Werkzeuge 6 und 7 auf das Werkstück 1. Der Druck erfolgt radial. Die Pfeile mit den ungefüllten Spitzen (in waagerechter Blattrichtung) kennzeichnen die wesentliche Richtung des Materialflusses. Sie liegt tangential, bezogen auf die Mantellinie bzw. die in Fig. 8 eingezeichnete umlaufende Mittenfaser des Werkstücks 1. Charakteristisch für das Tangentialprofilringwalzen ist die Vergrößerung des Werkstückdurchmessers. Außerdem verringert sich die Schulterhöhe des Werkstückes 1.

Die Figuren 9 und 10 zeigen im Schnitt bzw. in der Seitenansicht das Axialprofilringwalzen eine Werkstücks 1 zwischen zwei diametral gegenüberliegenden Profilwerkzeugen 6a und 6b und einem Walzdorn 7. Die Werkzeuge 6a, 6b und 7 drücken radial auf das Werkstück 1. Das Material fließt überwiegend axial. Charakteristisch für das Axialprofilringwalzen ist die Vergrößerung der Werkstückbreite. Sie nimmt wenigstens um den Betrag, der dem Volumen der eingewalzten Nut entspricht, zu.

### Bezugszeichenliste

- 1: - Werkstück
- 1': - Laufring
- 2: - Werkstück
- 2': - Stützring
- 3: - Werkstück
- 4: - Werkstück
- 5: - Werkstück
- 6, 6a, 6b: - Außenprofilwalzwerkzeug
- 7: - Walzdorn
- 8: - Verbundwälzlagerinnenring
- 9: - Verbundwälzlagerinnenring
- 10: - Getriebering
- 11: - Verbundwälzlageraußenring

## Patentansprüche

1. Kaltwalzverfahren zur Fertigung eines ringförmigen Verbundwerkstücks aus wenigstens zwei hohlzylindrischen Werkstücken aus verschiedenen Werkstoffen, die gemeinsam profilgewalzt werden, **gekennzeichnet dadurch, dass** die hohlzylindrischen Werkstücke (1 bis 5) mit einem an sich bekannten Axialprofil-walzverfahren zu einem Verbundwerkstück (8 bis 11) umgeformt werden, wobei zwei diametral entgegengesetzt angeordnete Außenprofilwalzwerkzeuge (6) gemeinsam mit einem Walzdorn (7) oder einem Innenprofilwalzwerkzeug (12) die hohlzylindrischen Werkstücke (1 bis 5) gegeneinander pressen.

2. Verfahren nach Anspruch 1, **gekennzeichnet dadurch, dass** die hohlzylindrischen Werkstücke (1 bis 5) vor dem Walzen lose ineinander gesteckt werden.

3. Verfahren nach den Ansprüchen 1 und 2, **gekennzeichnet dadurch, dass** die hohlzylindrischen Werkstücke (1 bis 5) ein solches Spiel zueinander aufweisen, dass sie gerade noch von Hand fügbar sind.

4. Verfahren nach Anspruch 1, **gekennzeichnet dadurch, dass** als hohlzylindrische Werkstücke (1 bis 5) ineinander gesteckte Ringe mit einem axialen Profilringwalzverfahren zu einem Verbundwerkstück (8 bis 11) umgeformt werden.

5. Verfahren nach Anspruch 1, **gekennzeichnet dadurch, dass** als hohlzylindrische Werkstücke (1 bis 5) ineinander gesteckte Rohre mit einem axialen Profilrohrwalzverfahren zu einem Verbundwerkstück (8 bis 11) umgeformt werden.

6. Verfahren nach Anspruch 1, **gekennzeichnet dadurch, dass** wenigstens eine der sich berührenden Flächen der hohlzylindrischen Werkstücke (1 bis 5) mit einem Material, z. B. Aluminium, beschichtet ist.

7. Ringförmiges Verbundwerkstück, bestehend aus zwei hohlzylindrischen Werkstücken wobei ein Werkstück aus Stahl und das zweite Werkstück aus einem Nichteisenmetall besteht, **gekennzeichnet dadurch, dass** das Verbundwerkstück durch ein axiales Profilwalzverfahren gefertigt ist, bei dem die hohlzylindrischen Werkstücke (1 bis 5) durch die Walzbewegung gegeneinander gepresst werden und somit die Verbindung der zwei hohlzylindrischen Werkstücke Merkmale einer Kaltpressschweißverbindung aufweist.

8. Verbundwerkstück nach Anspruch 7, **gekennzeichnet dadurch, dass** das Verbundwerkstück ein Wälzlagerring ist.

9. Verbundwerkstück nach Anspruch 7, **gekennzeichnet dadurch, dass** das Verbundwerkstück ein Getriebering ist.

10. Verbundwerkstück nach einem der Ansprüche 7 bis 9, **gekennzeichnet dadurch, dass** eines der Werkstücke (1 bis 5) aus einem Nichteisenmetall, insbesondere Aluminium, besteht.

11. Verbundwerkstück nach Anspruch 7, **gekennzeichnet dadurch, dass** eines der Werkstücke (1 bis 5) aus Pulverwerkstoff besteht.

## Claims

1. Cold roller method for the production of an annular composite work piece made of at least two hollow cylindrical work pieces made of different materials which are profile rolled together, **characterized by** the molding of the hollow cylindrical work pieces (1 to 5) with a known axial profile roller method to a composite work piece (8 to 11), whereas two diametrally opposing arranged outer profile roller tools (6) with a roller dome (7) or an inner profile roller tool (12) press the hollow cylindrical work pieces (1 to 5) against each other.

2. Method according to claim 1, **with the characteristic that** the hollow cylindrical work pieces (1 to 5) are fitted loosely in each other before rolling.

3. Method according to claims 1 and 2, **with the characteristic that** the hollow cylindrical work pieces (1 to 5) have such a tolerance that they can be fit together by hand.

4. Method according to claim 1, **with the characteristic that** the hollow cylindrical work pieces are rings molded in each other with an axial profile ring roller method to a composite work piece (8 to 11).

5. Method according to claim 1, **with the characteristic that** the hollow cylindrical work pieces are tubes placed in each other and are molded with an axial profile ring roller method to a composite work piece (8 to 11).

6. Method according to claim 1 **with the characteristic that** at least one of the touching surfaces of the hollow cylindrical work pieces (1 to 5) is coated with a material, e.g. aluminum.

7. Annular composite work piece, consisting of at least two hollow cylindrical work pieces wherein one work piece is made of steel and the second work piece is made of an nonferrous metal, **with the characteristic that** the composite work piece is produced through an axial profile roller method, wherein the hollow cylindrical work pieces (1 to 5) are pressed against each other by the pressure rolling movement and such the connection of the two hollow cylindrical work pieces gets the characteristics of an cold-pressure welding connection.

8. Composite work piece according to claim 7 **with the characteristic that** the composite work piece is a roller bearing ring.

9. Composite work piece according to claim 7 **with the characteristic that** the composite work piece is a gear ring.

10. Composite work piece according to one of the claims 7 to 9 **with the characteristic that** one of the work pieces (1 to 5) consists of a nonferrous metal, in particular aluminum.

11. Composite work piece according to claim 7 **with the characteristic** that one of the work pieces (1 to 5) is made of powder material.

## Revendications

1. Procédé de laminage à froid pour fabriquer une pièce composite annulaire constituée d'au moins deux pièces cylindriques creuses en matériaux différents qui sont soumises ensemble à un laminage de profil, **caractérisé en ce que** les pièces cylindriques creuses (1 à 5) sont façonnées en une pièce composite (8 à 11) par un procédé de laminage axial de profil en soi connu, sachant que deux outils extérieurs (6) de laminage de profil, disposés en étant diamétralement opposés, pressent les pièces cylindriques creuses (1 à 5) les unes contre les autres conjointement avec un mandrin de laminage (7) ou un outil intérieur (12) de laminage de profil.

2. Procédé selon la revendication 1, **caractérisé en ce que** les pièces cylindriques creuses (1 à 5) sont emboîtées de manière lâche les unes dans les autres avant le laminage.

3. Procédé selon les revendications 1 et 2, **caractérisé en ce que** les pièces cylindriques creuses (1 à 5) présentent un jeu les unes par rapport aux autres tel qu'elles peuvent tout juste être encore assemblées à la main.

4. Procédé selon la revendication 1, **caractérisé en ce que**, comme pièces cylindriques creuses (1 à 5), des bagues emboîtées les unes dans les autres sont façonnées en une pièce composite (8 à 11) par un procédé de laminage axial de bagues profilées.

5. Procédé selon la revendication 1, **caractérisé en ce que**, comme pièces cylindriques creuses (1 à 5), des tubes emboîtés les uns dans les autres sont façonnés en une pièce composite (8 à 11) par un procédé de laminage axial de tubes profilés.

6. Procédé selon la revendication 1, **caractérisé en ce qu'**au moins une des surfaces en contact mutuel des pièces cylindriques creuses (1 à 5) est revêtue d'un matériau, par exemple d'aluminium.

7. Pièce composite annulaire constituée de deux pièces cylindriques creuses, sachant qu'une pièce est en acier et que la deuxième pièce est en un métal non ferreux, **caractérisée en ce que** la pièce composite est fabriquée par un procédé de laminage axial de profil selon lequel les pièces cylindriques creuses (1 à 5) sont pressées l'une contre l'autre par le mouvement de laminage, de sorte que l'assemblage des deux pièces cylindriques creuses présente les caractéristiques d'un assemblage par soudage à froid.

8. Pièce composite selon la revendication 7, **caractérisée en ce que** la pièce composite est une bague de roulement.

9. Pièce composite selon la revendication 7, **caractérisée en ce que** la pièce composite est une bague d'engrenage.

10. Pièce composite selon l'une des revendications 7 à 9, **caractérisée en ce qu'**une des pièces (1 à 5) est constituée d'un métal non ferreux, en particulier d'aluminium.

11. Pièce composite selon la revendication 7, **caractérisée en ce qu'**une des pièces (1 à 5) est constituée de matériau en poudre.
